# EUROPÄISCHE PATENTSCHRIFT

(11) **EP 4 094 565 B1**
(45) Veröffentlichungstag und Bekanntmachung des Hinweises auf die Patenterteilung: **24.12.2025**
(21) Anmeldenummer: 22162895.1
(22) Anmeldetag: 18.03.2022
(51) Int. Cl.: A01D 43/10

(54) **ANTRIEBSVORRICHTUNG ZUM ANTREIBEN EINES LANDWIRTSCHAFTLICHEN WALZENPAARS SOWIE LANDMASCHINE MIT EINER SOLCHEN ANTRIEBSVORRICHTUNG**
DRIVE DEVICE FOR DRIVING AN AGRICULTURAL ROLLER PAIR AND AGRICULTURAL MACHINE WITH SUCH A DRIVE DEVICE
DISPOSITIF D'ENTRAINEMENT PERMETTANT D'ENTRAÎNER UNE PAIRE DE ROULEAUX DE MACHINE AGRICOLE, AINSI QUE MACHINE AGRICOLE DOTÉ D'UN TEL DISPOSITIF D'ENTRAINEMENT

(30) Priorität: 26.05.2021 DE 102021113561
(43) Veröffentlichungstag der Anmeldung: 30.11.2022
(73) Patentinhaber: Pöttinger Landtechnik GmbH, 4710 Grieskirchen (AT)
(72) Erfinder: DIETACHMAIR, Andreas, 4710 Grieskirchen, (AT); GREIFENENDER, August, 4710 Grieskirchen, (AT); WOLFSCHLUCKNER, Andreas, 4710 Grieskirchen, (AT); RUTTINGER, Peter, 4710 Grieskirchen, (AT)
(74) Vertreter: Lorenz Seidler Gossel Part. mbB

(56) Entgegenhaltungen:
- EP-A1- 3 973 765
- NL-C2- 1 023 352
- US-A1- 2015 052 866

## Beschreibung

Die vorliegende Erfindung betrifft allgemein landwirtschaftliche Maschinen mit einem zusammenwirkenden Walzenpaar, dessen Walzen von einer Antriebsvorrichtung gegenläufig rotierend antreibbar sind.

In landwirtschaftlichen Maschinen werden zusammenwirkende Walzenpaare verwendet, die gegenläufig rotierend angetrieben werden, beispielsweise um Erntegut zwischen den Walzen hindurch zu fördern und dabei durch Einwirkung der Walzen zu bearbeiten. Dabei kann es notwendig oder gewünscht sein, die Walzendrehzahlen zu synchronisieren bzw. exakt aufeinander abzustimmen, beispielsweise wenn die Walzen ineinander greifende, reliefartige Oberflächenstrukturen wie beispielsweise eine Riefenstruktur besitzen oder das Erntegut nur mit Druck beaufschlagt, aber nicht zerrieben werden soll.

Beispielsweise werden solche Walzenpaare in Konditionierern eingesetzt, die dem Mähwerk einer Mähmaschine nachgeschaltet oder dem Bandförderer eines Mergers vorgeschaltet sein können, vgl. US 2015/0052866 A1. Auch in anderen landwirtschaftlichen Maschinen wie beispielsweise Getreidequetschen oder Ernteguthäckslern können solche Walzenpaare vorgesehen sein.

Je nach Bearbeitungsaufgabe bzw. Maschinentyp kann es dabei erforderlich bzw. wünschenswert sein, die Walzen quer zur Walzendrehachse beweglich zu lagern, um den Spalt zwischen den Walzen verändern zu können, beispielsweise an den Erntegutstrom anpassen oder bei drohenden Überlastungen vergrößern zu können. Dabei muss auch die Antriebsvorrichtung zumindest teilweise quer zur Antriebs- bzw. Walzendrehachse beweglich ausgebildet sein, um die Verstellbewegungen der Walzen zuzulassen. Dabei können je nach Aufhängung der Walzen nicht nur einachsige Verstellbewegungen, bei denen das Spaltmaß über die Walzenlänge gleich bleibt, auftreten, sondern auch Kippbewegungen, die beispielsweise an einem Ende der Walzen den Spalt stärker vergrößern oder verkleinern als am gegenüberliegenden Ende.

Bei Walzenaufbereitern sind grundsätzlich verschiedene Antriebsvorrichtungen bekannt, beispielsweise endlos umlaufende Zahnriemen- oder Kettentriebe, die die genannten Bewegungen bzw. den Versatz der Walzen einfach ausgleichen bzw. zulassen können. Andererseits ist es aber auch bekannt, die Walzen über eine Stirnradgetriebeeinrichtung anzutreiben, wobei das Stirnradgetriebe üblicherweise als Synchronisationsstufe dient, die die Drehzahl der einen Walze unter Umkehrung der Drehrichtung auf die andere Walze gibt. Dabei wird eine der Walzen angetrieben, ggf. auch an einem gegenüberliegenden Ende, so dass die Stirnradgetriebestufe die Antriebsbewegung der einen Walze auf die andere überträgt.

Beispielsweise zeigt die Schrift US 62 20 007 B1 einen Walzenkonditionierer einer Mähmaschine, bei dem die beiden Konditioniererwalzen über eine Stirnradgetriebestufe miteinander synchronisiert werden. Dabei wird die untere Walze an einem Ende angetrieben, während am gegenüberliegenden anderen Ende eine Stirnradstufe angebracht ist, um die Antriebsbewegung der unteren Walze auf die obere Walze zu übertragen, vgl. auch EP 3 973 765 A1 und NL 1 023 352 C2. Um Abstands- bzw. Spaltveränderungen der Walzen zuzulassen, können zwei kämmende Stirnräder zusammen mit dem Schwenklenker, an dem eine der Walzen schwenkbar gelagert ist, verschwenken, wobei ein drittes Stirnrad wiederum schwenkbar an dem genannten Lenker gelagert ist. Um den hierbei auftretenden Synchronisationsversatz zu vermeiden, schlägt die US 71 88 461 B2 ein abgewandeltes Stirnradgetriebe vor, bei dem zwei kämmende Stirnräder der insgesamt vier Stirnräder aufweisenden Stirnradstufe koaxial zu den Schwenkachsen der Schwenklenker angeordnet sind. Ein weiteres Stirnradgetriebe zum Antreiben von landwirtschaftlichen Aufbereiterwalzen zeigt die EP 28 48 111 B1.

Diese vorbekannten Antriebsvorrichtungen mit einer Stirnradgetriebeeinrichtung sind jedoch relativ sperrig und auch massiv ausgeführt, um die Lagerkräfte der Walzen auffangen zu können. Gleichzeitig wird die angetriebene Walze über ihre Länge stark auf Torsion beansprucht, während andererseits die Aufbereiter- bzw. Presskraft der Walzen von der übertragenden Antriebskraft abhängt.

Der vorliegenden Erfindung liegt die Aufgabe zugrunde, eine verbesserte Antriebsvorrichtung der genannten Art sowie eine verbesserte landwirtschaftliche Maschine der genannten Art zu schaffen, die Nachteile des Standes der Technik vermeiden und Letzteren in vorteilhafter Weise weiterbilden. Insbesondere soll ein kompakt bauender, leicht abzudichtender Walzenantrieb geschaffen werden, der Winkelfehler und Achsversatz zwischen den Walzen ausgleichen kann.

Erfindungsgemäß wird die genannte Aufgabe durch eine landwirtschaftliche Maschine gemäß Anspruch 1 gelöst. Bevorzugte Ausgestaltungen der Erfindung sind Gegenstand der abhängigen Ansprüche.

Es wird also vorgeschlagen, die Walzen des zusammenwirkenden Walzenpaars von einer separaten Antriebswelle her über zwei Stirnradgetriebe anzutreiben, die jeweils die Antriebsbewegung von der Antriebswelle her auf die jeweilige Walze übertragen. Erfindungsgemäß besitzt die Antriebsvorrichtung ein erstes Stirnradgetriebe mit ungerader Stirnradzahl zum Antreiben einer ersten Walze des Walzenpaars und ein zweites Stirnradgetriebe mit gerader Stirnradzahl zum Antreiben einer zweiten Walze des Walzenpaars, wobei eine gemeinsame Antriebswelle, auf der beide Stirnradgetriebe mit jeweils einem Eingangsstirnrad sitzen, vorgesehen und zu den Walzen versetzt angeordnet ist.

Durch die gemeinsame, zu den Walzen versetzte Antriebswelle muss keine der Walzen die Antriebsleistung bzw. das Antriebsdrehmoment für die andere Walze übertragen, so dass jede Walze nur mit ihrer eigenen Antriebsleistung belastet zu werden braucht. Gleichzeitig kann der Antrieb zusammen mit der Stirnradgetriebestufe auf einer Seite der Walzen zusammengefasst werden, wobei die einmal gerade und einmal ungerade Anzahl an Stirnrädern ein gegenläufiges Rotieren der Walzen mit synchroner bzw. genau aufeinander abgestimmter Drehzahl bewirken kann. Dabei ermöglichen es die Stirnräder, hohe Leistungen zu übertragen, ohne dass die Antriebskräfte die Quetsch- bzw. Aufbereiterkraft des Walzenpaares beeinträchtigen würden.

Um eine möglichst kompakte Bauweise zu erreichen, die gleichwohl ein gegenläufiges Antreiben der Walzen von der gemeinsamen Antriebswelle her erlaubt, kann das erste Stirnradgetriebe drei Stirnräder und das zweite Stirnradgetriebe zwei Stirnräder aufweisen. Grundsätzlich wäre es auch möglich, Stirnradgetriebe mit drei bzw. vier Stirnrädern oder vier und fünf Stirnrädern zu verwenden, was jedoch zu einer unnötigen Aufblähung der Baugröße führen würde. Eine Ausführung mit zwei bzw. drei Stirnrädern kann dagegen nicht nur kompakter bauen, sondern die Antriebskräfte auch verlustarm und versatz- bzw. spielarm übertragen, da sich Abwälz- bzw. Eingriffswiderstände und ggf. Übertragungsversatz durch Elastizitäten oder Spiel nicht an längeren Stirnradketten aufsummieren.

In vorteilhafter Weiterbildung der Erfindung können die beiden Stirnradgetriebe in separaten Getriebegehäusen oder zumindest in separaten, gegeneinander abgedichteten Getriebekammern untergebracht sein, wodurch sich die Abdichtung deutlich vereinfacht. Vorteilhafterweise können die beiden Stirnradgetriebe separat abgedichtet sein und separate Schmiermittelreservoirs besitzen. Die Schmiermittelreservoirs können dabei nicht nur gegen die Umgebung, sondern auch gegeneinander abgedichtet sein.

Insbesondere können die beiden Stirnradgetriebe zusammen mit ihren separaten Getriebegehäusen zueinander beweglich, insbesondere um eine Schwenkachse verschwenkbar sein, so dass das eine Stirnradgetriebe gegenüber dem anderen Stirnradgetriebe verschwenken und in verschiedene Winkelstellungen gebracht werden kann. Die genannte Schwenkachse kann sich dabei insbesondere koaxial zu der gemeinsamen Antriebsachse erstrecken, so dass die Stirnradgetriebe relativ zueinander um die Antriebsachse verschwenken können.

In vorteilhafter Weiterbildung der Erfindung können die beiden Stirnradgetriebe axial in Richtung der Antriebswelle zueinander versetzt sein, so dass bei Betrachtung in einer Blickrichtung parallel zur Antriebswelle das eine Stirnradgetriebe hinter dem anderen Stirnradgetriebe angeordnet ist. Die zueinander axial versetzte Anordnung der Stirnradgetriebe kann insbesondere durch eine Hintereinanderanordnung der beiden Eingangsstirnräder der beiden Stirnradgetriebe auf der Antriebswelle erzielt werden. Die beiden Eingangsstirnräder können koaxial zueinander axial hintereinander auf der Antriebswelle sitzen und gegebenenfalls voneinander beabstandet sein, um eine separate Aufnahme in separaten Getriebekammern zu ermöglichen.

Grundsätzlich wäre es auch möglich, ein Zwillings-Stirnrad als Eingangsräder der beiden Stirngetriebe zu verwenden, ggf. mit einem Einschnitt zwischen den beiden Wälzabschnitten, in dem sich eine Gehäusewandung erstrecken könnte. Vorzugsweise jedoch besitzen die beiden Stirnradgetriebe separate Eingangs-Stirnräder, die in separaten Getriebegehäusen aufgenommen sind und separat auf die Antriebswelle aufgesteckt werden können.

Betrachtet man die beiden Stirnradgetriebe mit einer Blickrichtung parallel zur Antriebswelle, können die beiden Stirnradgetriebe mit ihren Getriebegehäusen eine etwa V-förmig aufgespreizte Anordnung bilden, die sich ausgehend von der gemeinsamen Antriebswelle zu den beiden Walzen erstreckt. Die V-förmige Verschränkung kann sich dabei in ihrem Spreizwinkel ändern, um eine Abstandsveränderung der beiden Walzen voneinander zu ermöglichen bzw. einer solchen Abstandsveränderung zu folgen.

Durch die genannte Verschwenkbarkeit der beiden Stirnradgetriebe können die anzutreibenden Walzen quer zu den Walzenlängsachsen zueinander verstellbar aufgehängt werden, um das Spaltmaß zwischen den beiden Walzen einstellbar bzw. anpassbar oder verstellbar zu machen. Insbesondere kann eine der Walzen, insbesondere die obere Walze schwenkbar aufgehängt, beispielsweise an einer Schwinge oder einem Schwingenpaar gelagert sein, so dass die Walze sich von der anderen Walze wegbewegen und auf diese zubewegen kann. Unabhängig hiervon kann die andere Walze, insbesondere die untere Walze drehbar, aber ortsfest an einem Rahmen gelagert sein.

Durch eine solche abstandsveränderliche bzw. spaltmaßveränderbare Lagerung der beiden Walzen zueinander können sich diese an den zu bearbeitenden Erntegutstrom anpassen, insbesondere sich ein Stück weit voneinander entfernen bzw. nachgeben, um bei zunehmendem Erntegutstrom oder gar einer Verstopfung aufmachen zu können.

In vorteilhafter Weiterbildung der Erfindung ist das Stirnradgetriebe mit der kleineren Stirnradzahl der schwenkbar bzw. abstandveränderlich aufgehängten Walze zugeordnet. Hierdurch kann die beweglich aufgehängte Walze leichtfüßiger auf Veränderungen des Erntegutstroms reagieren und sich im Abstand von der anderen Walze selbst einstellen bzw. anpassen. Sind in der vorgenannten Weise Stirnradgetriebe mit zwei und drei Stirnrädern vorgesehen, kann das zweirädrige Stirnradgetriebe der schwenkbar aufgehängten Walze derart zugeordnet sein, dass bei drohenden Verstopfungen oder stark ansteigendem Antriebswiderstand an der schwenkbar aufgehängten Walze ein selbst-öffnender Effekt erzielt wird und die über die beiden Stirnräder übertragenen Antriebskräfte bzw. -momente die beweglich aufgehängte Walze von der anderen Walze wegzubewegen versuchen.

Das Stirnradgetriebe mit der größeren Stirnradzahl kann in Weiterbildung der Erfindung einer Walze des Walzenpaars zugeordnet sein, die drehbar, aber ortsfest am Rahmen gelagert ist.

Vorteilhafterweise ist die vorgenannte, beweglich bzw. schwenkbar aufgehängte Walze an einer von den Stirnradgetrieben separaten Aufhängung, beispielsweise einer Schwenklenker-Anordnung, aufgehängt und gelagert, so dass keine Anpress- bzw. Lagerreaktionskräfte, die aus der beweglichen Aufhängung der Walze resultieren, auf das Stirnradgetriebe einwirkt, das die genannte Walze antreibt. Das besagte Stirnradgetriebe überträgt lediglich die Antriebskräfte und muss keine zusätzlichen Lagerreaktionskräfte übertragen, die die Walze in Position halten. Die Lagerreaktionskräfte werden über die von den Stirnradgetrieben separate Aufhängung bzw. die genannte Lenkeranordnung abgefangen.

Um Kippbewegungen der beweglich aufgehängten Walze um eine Kippachse senkrecht zur Walzenlängsachse bzw. Achsversatz ausgleichen bzw. kompensieren zu können, kann das Stirnradgetriebe zum Antreiben der beweglich aufgehängten Walze gelenkig, insbesondere elastisch gelenkig, mit der Walze verbunden sein, wobei die gelenkige Verbindung zwischen der Abtriebswelle des Stirnradgetriebes und der Walze ein oder mehrachsige Kippbewegungen bezüglich einer oder mehrerer Kippachsen, die auf die Walzenlängsachse senkrecht stehen, und/oder Querversatz der Abtriebswelle zur Walzendrehachse zulassen, andererseits aber Antriebskräfte bzw. -drehmomente bezüglich der rotatorischen Antriebsbewegung übertragen kann.

Vorteilhafterweise kann eine solche elastisch gelenkige Verbindung ein elastisches, beispielsweise gummielastisches Verbindungselement umfassen, das beispielsweise in Form einer Verbindungsplatte ausgebildet sein kann. Dieses elastische Verbindungselement erfährt Verformungen und lässt solche Verformungen zu, wenn die anzutreibende Walze gegenüber der Abtriebswelle des Stirnradgetriebes verkippt, so dass die Walzenlängsachse nicht mehr mit der Abtriebswelle bzw. deren Längsachse fluchtet.

Das genannte elastische Element kann ein starr an der Walze befestigtes Verbindungselement mit einem starr an der Antriebswelle des Stirnradgetriebes verbundenes Verbindungselement miteinander verbinden bzw. zwischen diese beiden starr befestigten Verbindungselemente geschaltet sein.

Um ein unrundes Umlaufen bzw. eine Unwucht zu vermeiden, kann die Abtriebswelle des Stirnradgetriebes mit der anzutreibenden Walze durch eine Zentrierung verbunden sein, die die Antriebsachse zur Walze zentriert und Unwuchten aufgrund Verformungen der elastisch gelenkigen Verbindung vermeidet.

Die Stirnradgetriebeeinrichtung kann in vorteilhafter Weiterbildung der Erfindung genau eine Eingangswelle und genau zwei Ausgangswellen besitzen, wobei die genannte Eingangswelle die gemeinsame Antriebswelle für die beiden Stirnradstufen und die beiden Ausgangswellen bzw. Abtriebswellen drehfest mit den beiden Walzen verbunden sein können. Die genannten Abtriebswellen können dabei zumindest näherungsweise fluchtend mit den Walzendrehachsen angeordnet sein.

In vorteilhafter Weiterbildung der Erfindung können die Stirnräder der Stirnradgetriebe als Zahnräder ausgebildet sein und im Kammeingriff miteinander stehen.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Ansicht eines Walzenpaars und einer Antriebsvorrichtung zum gegenläufigen Antreiben der Walzen mit zwei Stirnradgetrieben einer landwirtschaftlichen Maschine, die nach einer vorteilhaften Ausführung der Erfindung als Konditionierer ausgebildet sein kann,
- Fig. 2:: eine perspektivische Ansicht der beiden Stirnradgetriebe der Antriebsvorrichtung aus Fig. 1, die die beiden auf einer gemeinsamen Antriebswelle sitzenden Stirnradgetriebe und einen um die Antriebswelle verschwenkbaren Aufhängungslenker für die obere Walze zeigt,
- Fig. 3:: eine perspektivische Ansicht der beiden Stirnradgetriebe von der Antriebswellenseite her,
- Fig. 4:: eine Draufsicht auf die beiden Stirnradgetriebe aus den vorhergehenden Figuren, die die gegenläufigen Drehrichtungen der Abtriebswellen der beiden Stirnradgetriebe zeigt,
- Fig. 5:: eine Schnittansicht der beiden Stirnradgetriebe durch die gemeinsame Antriebswelle, die die axial nebeneinander angeordneten, auf der gemeinsamen Antriebswelle sitzenden Eingangs-Stirnräder der Stirnradgetriebe zeigt, und
- Fig. 6:: eine ausschnittsweise vergrößerte Schnittansicht der Anbindung der Abtriebswelle des Stirnradgetriebes an die beweglich aufgehängte Walze mittels eines elastischen Elements.

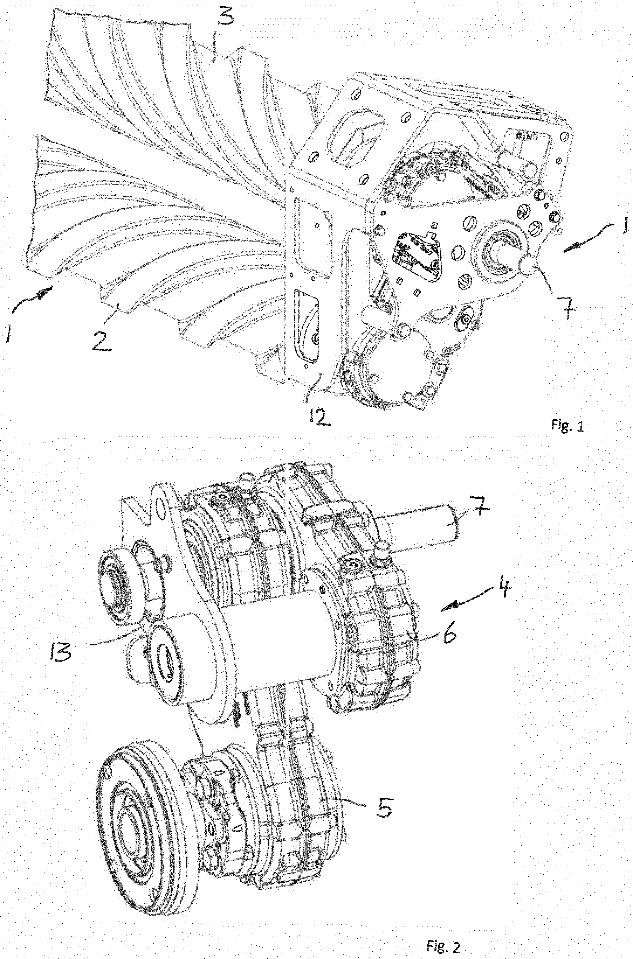

Wie Fig. 1 zeigt, kann das gegenläufig anzutreibende Walzenpaar 1 zwei Walzen 2, 3 umfassen, die sich näherungsweise parallel zueinander erstrecken und gegenläufig zueinander rotieren, um einen Erntegutstrom zwischen sich hindurch zu fördern. Die genannten Walzen 2 und 3 können mit einer Oberflächenprofilierung beispielsweise in Form eines schraubenförmigen Reliefprofils versehen sein, wobei die Profilelemente bei synchronem Umlaufen der Walzen 2, 3 ineinandergreifen können.

Das Walzenpaar 1 kann insbesondere zur Futteraufbereitung vorgesehen sein, beispielsweise um Grünfutter durch Druck und/oder Verformung beim Durchtritt durch das Walzenpaar 1 aufzuschließen, wobei unabhängig vom konkreten Aufbereitungszweck die genannten Walzen 2, 3 Quetschwalzen bilden können. Das Walzenpaar 1 des Konditionierers kann beispielsweise den Mähaggregaten einer Mähmaschine nachgeordnet sein, oder dem Förderband eines Merger vorgeschaltet sein. Je nach Ausbildung kann das Walzenpaar 1 aber auch an anderer Stelle der landwirtschaftlichen Maschine angeordnet sein.

Wie die Figuren zeigen, werden die beiden Walzen 2, 3 durch eine Antriebsvorrichtung 4 angetrieben, die zwei Stirnradgetriebe 5, 6 umfasst, die die beiden Walzen 2, 3 von einer gemeinsamen Antriebswelle 7 her antreiben.

Wie die Figuren 1-3 zeigen, kann die genannte Antriebswelle 7 gegenüber den Drehachsen der beiden Walzen 2, 3 versetzt angeordnet sein, wobei die Antriebswelle 7 und die beiden Drehachsen der Walzen 2, 3 beispielsweise ein Dreieck aufspannen können. Die Antriebswelle 7 kann in einem Bereich zwischen den beiden Walzen 2, 3, aber außerhalb der Konturen der Walzen 2, 3 angeordnet sein, wenn die Anordnung mit einer Blickrichtung parallel zur Antriebswelle 7 betrachtet wird.

Dabei kann der Abstand der Antriebswelle 7 von einer der Walzen 3 größer sein als von der anderen Walze 2, insbesondere weil die Stirnradgetriebe 5, 6 unterschiedliche Stirnradzahlen aufweisen können.

Insbesondere kann ein erstes Stirnradgetriebe 5 eine ungerade Stirnradzahl und das zweite Stirnradgetriebe 6 eine gerade Stirnradzahl aufweisen. Um besonders kompakt zu bauen, kann das genannte erste Stirnradgetriebe 5 drei Stirnräder und das zweite Stirnradgetriebe 6 zwei Stirnräder aufweisen. Bei zwei- und dreirädriger Ausbildung der Stirnradgetriebe 5, 6 kann nicht nur die Baugröße und das Gewicht der Antriebsvorrichtung 4 klein gehalten werden, sondern es wird auch eine effiziente und knackige Übertragung der Antriebsbewegungen ohne Elastizitäten erzielt, so dass die Walzen 2, 3 exakt synchron bzw. exakt mit dem gewünschten Drehzahlverhältnis umlaufen.

Die genannten Stirnräder können dabei alle den gleichen Wälzkreisdurchmesser bzw. die gleiche Zähnezahl aufweisen. Alternativ ist es aber auch möglich, zur Erzielung einer Unter- bzw. Übersetzung paarweise gleiche Wälzkreisdurchmesser-Verhältnisse bzw. Zähnezahl-Verhältnisse vorzusehen.

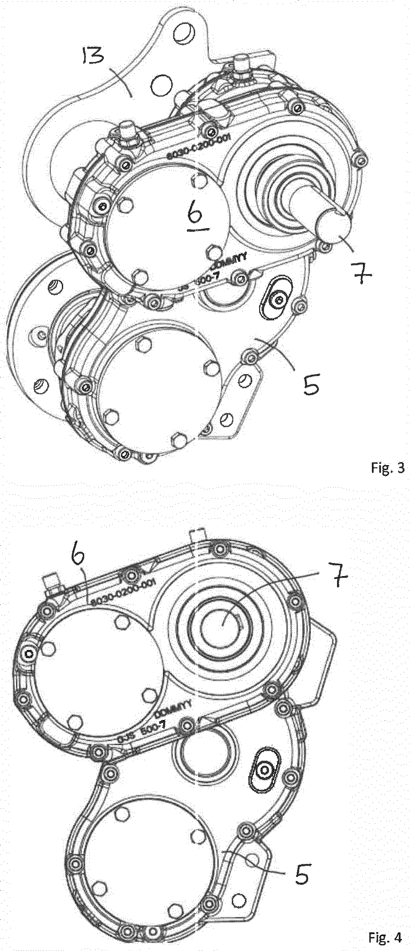

Wie die Figuren 2 und 3 zeigen, besitzen die Stirnradgetriebe 5, 6 eigene Getriebegehäuse 8, 9, die sowohl gegeneinander als auch gegen die Umgebung durch eine geeignete Dichtung abgedichtet sein können. Die genannten Stirnradgetriebe 5, 6 können jeweils ihr eigenes Schmiermittelreservoir umfassen, das durch eine geeignete Dichtung gegenüber der Umgebung und auch gegenüber dem Schmiermittelreservoir des jeweils anderen Stirnradgetriebes abgedichtet sein kann.

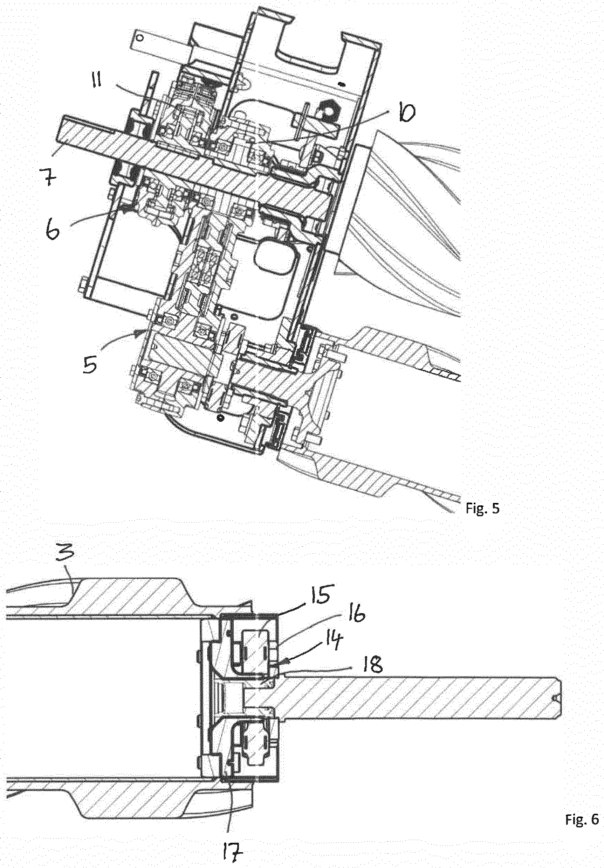

Die beiden Stirnradgetriebe 5 und 6 können jeweils mit einem Eingangsstirnrad 10 bzw. 11 auf der gemeinsamen Antriebswelle 7 sitzen, so dass die beiden Eingangsstirnräder 10, 11 koaxial zueinander und in axialer Richtung der Antriebswelle 7 hintereinander angeordnet sind, vgl. Fig. 5.

Die beiden Stirnradgetriebe 5, 6 sind also axial in Richtung der Antriebswelle 7 zueinander versetzt angeordnet bzw. hintereinander auf die Antriebswelle 7 aufgefädelt.

Vorzugsweise sind beide Stirnradgetriebe 5, 6 auf derselben Seite bzw. am selben stirnseitigen Ende des Walzenpaars 1 angeordnet.

Vorteilhafterweise sind die beiden Stirnradgetriebe 5, 6, insbesondere deren Getriebegehäuse 8, 9, zueinander verschwenkbar, und zwar um eine Schwenkachse parallel zur Antriebswelle 7, so dass die Stirnradgetriebe 5, 6 Schwenkbewegungen der Walzen 2, 3 mitmachen bzw. ausgleichen können.

Beispielsweise kann eine der Walzen, beispielsweise die untere Walze 2 an einem Aggregatsrahmen 12 drehbar, aber ortsfest gelagert sein, während die andere Walze 3, beispielsweise die obere Walze, beweglich aufgehängt sein kann, um den Abstand zur anderen Walze verändern bzw. einstellen zu können. Insbesondere kann die beweglich aufgehängte Walze 3 mittels einer Schwenklenkeranordnung 13 schwenkbar aufgehängt sein um eine Schwenkachse, die koaxial zur Antriebswelle 7 angeordnet sein kann.

Anstelle einer Schwenklenkeranordnung 13 kommt ggf. auch ein anderes Aufhängungslager in Betracht, beispielsweise eine Kulissenführung, mittels derer die beweglich gelagerte Walze 3 beispielsweise auf einer Kreisbogenbahn um die Antriebswelle 7 verschoben werden kann, um den Abstand zur fest gelagerten Walze 2 variieren zu können.

Vorteilhafterweise ist die schwenkbar bzw. beweglich gelagerte Walze 3 aber in jedem Fall durch eine von der Antriebsvorrichtung 4 separate Lageranordnung aufgehängt, um keine Lagerkräfte auf die Stirnradgetriebe 5, 6 zu übertragen.

Vorzugsweise wird die beweglich aufgehängte Walze 3 von dem zweiten Stirnradgetriebe 6 mit der kleineren Stirnradzahl angetrieben, insbesondere dem Stirnradgetriebe 6 mit nur zwei Stirnrädern. Hierdurch kann nicht nur ein besonders leichtfüßiges Ansprechen der Walze 3 auf Volumenänderungen im Erntegutstrom erzielt werden, sondern auch ein selbstöffnender Effekt für die Walze 3 bei einer drohenden Verstopfung.

Wie Fig. 2 verdeutlicht, kann das Stirnradgetriebe 6 zum Antreiben der beweglich aufgehängten Walze 3 vom stirnseitigen Ende des Walzenpaars 1 weiter beabstandet angeordnet sein als das Stirnradgetriebe 5, das die drehbar aber fest gelagerte Walze 2 antreibt, vgl. Fig. 2.

Betrachtet man die Antriebsvorrichtung 4 mit einer Blickrichtung parallel zur Längsachse der gemeinsamen Antriebswelle 7, vgl. Fig. 4, können die beiden Stirnradgetriebe 5, 6, insbesondere deren Getriebegehäuse 8, 9 eine V-förmige Anordnung bilden, die sich ausgehend von der gemeinsamen Antriebswelle 7 zu den beiden Walzen 2, 3 erstreckt. Dabei kann sich der V-Winkel bzw. Aufspreizwinkel zwischen den beiden Stirnradgetrieben 5, 6 ändern, um den Abstandsbewegungen der beiden Walzen 2, 3 zu folgen bzw. diese zu gestatten.

Um Winkelfehler und Achsversatz zwischen der Abtriebswelle des Stirnradgetriebes und der zugehörigen Walze auszugleichen, kann zwischen der Getriebeabtriebswelle und der Walze eine gelenkige, insbesondere elastisch gelenkige Verbindung 14 vorgesehen sein, die zwar die rotatorische Antriebsbewegung auf die Walze übertragen, gleichzeitig aber einen Winkelversatz oder Achsversatz zulassen kann. Vorteilhafterweise kann eine solche elastisch gelenkige Verbindung 14 ein elastisches, insbesondere gummielastisches Verbindungselement 15 umfassen, das beispielsweise ring- oder plattenförmig ausgebildet sein kann.

Das genannte elastische Verbindungselement 15 kann insbesondere zwischen einem starr mit der Antriebswelle verbundenen Verbindungselement 16 und einem starr mit der Walze verbundenen Verbindungselement 17 angeordnet sein, wobei die genannten Verbindungselemente 16 und 17 beispielsweise in Form eines sich näherungsweise radial oder quer zur Drehrichtung erstreckenden Anschlussflanschs ausgebildet sein können. Das genannte elastische Verbindungselement 15 kann zwischen diesen beiden Anschlussflanschen vorgesehen sein, vgl. Fig. 6.

Das elastische Verbindungselement 15 kann dabei das Antriebsdrehmoment übertragen und sich verformen, um beispielsweise leichte Abknickbewegungen der Walze auszugleichen.

Um einen unrunden Lauf bzw. eine Unwucht zu vermeiden, kann eine Zentriervorrichtung 18 die Abtriebswelle des Stirnradgetriebes gegenüber der Walze zentrieren, wobei eine solche Zentriervorrichtung 18 beispielsweise eine Zentrierhülse umfassen kann. Unabhängig hiervon kann sich die Zentriervorrichtung 18 über das elastische Verbindungselement 15 axial hinweg erstrecken und das walzenseitige Anschlusselement 17 mit der Abtriebswelle des Stirnradgetriebes zentrierend verbinden.

## Patentansprüche

1. Landwirtschaftliche Maschine mit einem Walzenpaar (1) zum Bearbeiten von Erntegut sowie einer Antriebsvorrichtung zum gegenläufigen Antreiben des genannten Walzenpaars (1), wobei die genannte Antriebsvorrichtung eine Stirnradgetriebeeinrichtung umfasst, die ein erstes Stirnradgetriebe (5) mit ungerader Stirnradzahl zum Antreiben einer ersten Walze (2) des Walzenpaars (1) und ein zweites Stirnradgetriebe (6) mit gerader Stirnradzahl zum Antreiben der zweiten Walze (3) des Walzenpaars (1) aufweist, **gekennzeichnet durch** eine gemeinsame, von den anzutreibenden Walzen (2, 3) versetzt angeordnete, als Getriebeeingangswelle ausgebildete Antriebswelle (7), auf der die beiden Stirnradgetriebe (5, 6) mit jeweils einem Eingangsstirnrad (10, 11) sitzen.

2. Landwirtschaftliche Maschine nach dem vorhergehenden Anspruch, wobei das erste Stirnradgetriebe (5) genau drei Stirnräder und das zweite Stirnradgetriebe (6) genau zwei Stirnräder besitzt.

3. Landwirtschaftliche Maschine nach einem der vorhergehenden Ansprüche, wobei die beiden Stirnradgetriebe (5, 6) zwei separate Getriebegehäuse (8, 9) aufweisen, die gegeneinander und zur Umgebung hin abgedichtet sind.

4. Landwirtschaftliche Maschine nach einem der vorhergehenden Ansprüche, wobei die Stirnradgetriebe (5, 6) separate, gegeneinander abgedichtete Schmiermittelreservoirs aufweisen.

5. Landwirtschaftliche Maschine nach einem der vorhergehenden Ansprüche, wobei die beiden Stirnradgetriebe (5, 6) zueinander um eine Schwenkachse schwenkbar sind, die zumindest näherungsweise koaxial zur gemeinsamen Antriebswelle (7) angeordnet ist.

6. Landwirtschaftliche Maschine nach dem vorhergehenden Anspruch, wobei das Stirnradgetriebe (6) mit der kleineren Stirnradzahl eine quer zur Walzenlängsachse beweglich aufgehängte, vorzugsweise obere, Walze (3) antreibt und das Stirnradgetriebe (5) mit der größeren Stirnradzahl eine drehbar, aber ortsfest gelagerte Walze (2) antreibt.

7. Landwirtschaftliche Maschine nach einem der vorhergehenden Ansprüche, wobei das Stirnradgetriebe (6) mit der geraden Stirnradzahl einer/der quer zur Walzenlängsachse beweglich aufgehängten Walze (3) derart zugeordnet ist, dass die genannte Walze (3) bei Verstopfungen oder zunehmendem Antriebswiderstand durch die Antriebskräfte des genannten Stirnradgetriebes (3) eine Bewegungskraft erfährt, die von der anderen Walze (2) wegtreibend gerichtet ist, und/oder einen selbstöffnenden Effekt erfährt, wobei vorzugsweise die beweglich aufgehängte Walze (3) auf der Seite des Eingangsstirnrads (11) des genannten Stirnradgetriebes (6) angeordnet ist, auf der das Eingangsstirnrad (11) von der anderen Walze (2) wegläuft, insbesondere nach oben läuft.

8. Landwirtschaftliche Maschine nach einem der vorhergehenden Ansprüche, wobei eine von den Stirnradgetrieben (5, 6) separate Aufhängung zum beweglichen Aufhängen einer der Walzen (3) und Abtragen von Lagerkräften an den Stirnradgetrieben (5, 6) vorbei vorgesehen ist, wobei die genannte Aufhängung insbesondere eine Schwenklenkeranordnung (13) aufweist, die die genannte Walze (3) um eine Schwenkachse schwenkbar lagert, die sich zumindest näherungsweise koaxial zur gemeinsamen Antriebswelle (7) erstreckt.

9. Landwirtschaftliche Maschine nach einem der vorhergehenden Ansprüche, wobei zwischen zumindest einer Walze, insbesondere der quer zur Walzenlängsachse beweglich aufgehängten Walze (3), und dem zugehörigen Stirnradgetriebe (6) eine gelenkige, vorzugsweise elastisch gelenkige Antriebsverbindung (14) vorgesehen ist, die dazu ausgebildet ist, Antriebsdrehmoment zu übertragen und Winkelfehler und/oder Achsversatz zwischen der Abtriebswelle des Stirnradgetriebes (6) und der Walze (3) zu kompensieren.

10. Landwirtschaftliche Maschine nach dem vorhergehenden Anspruch, wobei die genannte gelenkige Verbindung (14) ein elastisches Verbindungselement (15) aufweist, das zwischen einem starr mit der Abtriebswelle des Stirnradgetriebes (6) verbundenen Verbindungselements (16) und einem starr an der Walze (3) angebrachten Verbindungselement (17) angeordnet ist und diese beiden Verbindungselemente (16, 17) drehmomentübertragend verbindet derart, dass das genannte Verbindungselement (15) bei Knickbewegungen der Walze (3) gegenüber der Abtriebswelle des Stirnradgetriebes (6) eine elastische Verformung erfährt, wobei das elastische Verbindungselement (15) insbesondere eine elastische, vorzugsweise gummielastische, Platte oder Ringplatte bildet, die zwischen zwei Anschlussflanschen montiert ist, die die genannten Verbindungselemente (16, 17) bilden.

11. Landwirtschaftliche Maschine nach einem der vorhergehenden Ansprüche, wobei die Abtriebswelle des Stirnradgetriebes (6) durch eine Zentriervorrichtung (18) gegenüber der von dem Stirnradgetriebe (6) angetriebenen Walze (3) zentriert ist.

12. Landwirtschaftliche Maschine nach einem der vorhergehenden Ansprüche, wobei die beiden Stirnradgetriebe (5, 6) axial in Richtung der Antriebswelle (7) zueinander versetzt und/oder auf derselben Seite des anzutreibenden Walzenpaars (1) angeordnet sind, wobei vorzugsweise das Stirnradgetriebe (6) mit der kleineren Stirnradzahl weiter vom stirnseitigen Ende des Walzenpaars (1) beabstandet angeordnet ist als das Stirnradgetriebe (5) mit der größeren Stirnradzahl

13. Landwirtschaftliche Maschine nach einem der vorhergehenden Ansprüche, wobei eine untere Walze (2) des Walzenpaars (1) drehbar, aber ortsfest an einem Aggregatsrahmen gelagert ist und eine obere Walze (3) des Walzenpaars (1) höhenbeweglich aufgehängt ist, wobei der unteren Walze (2) das dreirädrige Stirnradgetriebe (5) und der oberen Walze (3) das zweirädrige Stirnradgetriebe (6) zugeordnet ist.

14. Landwirtschaftliche Maschine nach einem der vorhergehenden Ansprüche, die als Konditionierer zum Aufbereiten von geschnittenem Erntegut ausgebildet ist.

## Claims

1. Agricultural machine comprising a pair of rollers (1) for processing crops, and a drive device for driving the mentioned pair of rollers (1) in a counterrotating manner, wherein the mentioned drive device comprises a spur gearing means which has a first spur gearing (5) having an uneven number of spur gears for driving a first roller (2) of the pair of rollers (1), and a second spur gearing (6) having an even number of spur gears for driving the second roller (3) of the pair of rollers (1), **characterised by** a common drive shaft (7) that is arranged offset from the rollers (2, 3) to be driven and is configured as a gearing input shaft, on which the two spur gearings (5, 6) are positioned with an input spur gear (10, 11) in each case.

2. Agricultural machine according to the preceding claim, wherein the first spur gearing (5) has precisely three spur gears, and the second spur gearing (6) has precisely two spur gears.

3. Agricultural machine according to either of the preceding claims, wherein the two spur gearings (5, 6) comprise two separate gearing housings (8, 9) which are sealed against one another and with respect to the surroundings.

4. Agricultural machine according to any of the preceding claims, wherein the spur gearings (5, 6) comprise separate lubricant reservoirs that are sealed against one another.

5. Agricultural machine according to any of the preceding claims, wherein the two spur gearings (5, 6) are pivotable relative to one another about a pivot axis which is arranged at least approximately coaxially with the common drive shaft (7).

6. Agricultural machine according to the preceding claim, wherein the spur gearing (6) having the smaller number of spur gears drives a, preferably upper, roller (3) that is suspended so as to be movable transversely to the roller longitudinal axis, and the spur gearing (5) having the larger number of spur gears drives a roller (2) that is mounted rotatably but in a stationary manner.

7. Agricultural machine according to any of the preceding claims, wherein the spur gearing (6) with the even number of spur gears is associated with a/the roller (3) that is suspended so as to be movable transversely to the roller longitudinal axis, in such a way that the mentioned roller (3) experiences a movement force, in the case of blockages or increasing drive resistance, by the drive forces of the mentioned spur gearing (3), which movement force is directed in a manner driving away from the other roller (2), and/or experiences a self-opening effect, wherein the movably suspended roller (3) is preferably arrange on the side of the input spur gear (11) of the mentioned spur gearing (6) on which the input spur gear (11) moves away from the other roller (2), in particular moves upwards.

8. Agricultural machine according to any of the preceding claims, wherein a suspension separate from the spur gearings (5, 6), for movable suspension of one of the rollers (3) and for carrying away bearing forces past the spur gearings (5, 6) is provided, wherein the mentioned suspension in particular comprises a pivot link arrangement (13) which mounts the mentioned roller (3) so as to be pivotable about a pivot axis which extends at least approximately coaxially to the common drive shaft (7).

9. Agricultural machine according to any of the preceding claims, wherein a hinged, preferably resiliently hinged, drive connection (14) is provided between at least one roller, in particular the roller (3) suspended so as to be movable transversely to the roller longitudinal axis, and the associated spur gearing (6), which drive connection is configured for transmitting drive torques and for compensating angular errors and/or axial offset between the output shaft of the spur gearing (6) and the roller (3).

10. Agricultural machine according to the preceding claim, wherein the mentioned hinged connection (14) comprises a resilient connection element (15) which is arranged between a connection element (16) that is rigidly connected to the output shaft of the spur gearing (6) and a connection element (3) that is rigidly connected to the roller (3), and which connects these two connection elements (16, 17) in a torque-transmitting manner in such a way that the mentioned connection element (15) experiences elastic deformation in the case of bending movements of the roller (3) relative to the output shaft of the spur gearing (6), wherein the resilient connection element (15) in particular forms a resilient, preferably rubber-elastic, plate or annular plate which is mounted between two connecting flanges which form the mentioned connection elements (16, 17).

11. Agricultural machine according to any of the preceding claims, wherein the output shaft of the spur gearing (6) is centred relative to the roller (3) driven by the spur gearing (6) by means of a centring device (18).

12. Agricultural machine according to any of the preceding claims, wherein the two spur gearings (5, 6) are axially offset relative to one another in the direction of the drive shaft (7) and/or are arranged on the same side of the pair of rollers (1) to be driven, wherein preferably the spur gearing (6) having the smaller number of spur gears is arranged so as to be spaced further from the front-face end of the pair of rollers (1) than the spur gearing (5) having the larger number of spur gears.

13. Agricultural machine according to any of the preceding claims, wherein a lower roller (2) of the pair of rollers (1) is mounted rotatably but in a stationary manner on a unit frame, and an upper roller (3) of the pair of rollers (1) is suspended so as to be movable in height, wherein the lower roller (2) is associated with the three-gear spur gearing (5) and the lower roller (3) is associated with the two-gear spur gearing (6).

14. Agricultural machine according to any of the preceding claims, which is configured as a conditioner for processing cut crops.

## Revendications

1. Machine agricole avec une paire de rouleaux (1) pour le traitement de produits récoltés, ainsi qu'un dispositif d'entraînement pour l'entraînement contrarotatif de ladite paire de rouleaux (1), ledit dispositif d'entraînement comprenant un appareil à engrenages cylindriques qui présente un premier engrenage cylindrique (5) avec un nombre impair de dents pour entraîner un premier rouleau (2) de la paire de rouleaux (1) et un deuxième engrenage cylindrique (6) avec un nombre pair de dents pour entraîner le deuxième rouleau (3) de la paire de rouleaux (1), **caractérisée par** un arbre d'entraînement commun (7) agencé en décalage par rapport aux rouleaux à entraîner (2, 3), réalisé sous forme d'arbre d'entrée d'engrenage, sur lequel reposent les deux engrenages cylindriques (5, 6) avec chacun une dent d'entrée (10, 11).

2. Machine agricole selon la revendication précédente, le premier engrenage cylindrique (5) comportant exactement trois dents et le deuxième engrenage cylindrique (6) comportant exactement deux dents.

3. Machine agricole selon l'une quelconque des revendications précédentes, les deux engrenages cylindriques (5, 6) présentant deux carters d'engrenage séparés (8, 9) qui sont étanches l'un par rapport à l'autre et par rapport à l'environnement.

4. Machine agricole selon l'une quelconque des revendications précédentes, les engrenages cylindriques (5, 6) présentant des réservoirs de lubrifiant séparés, étanches l'un par rapport à l'autre.

5. Machine agricole selon l'une quelconque des revendications précédentes, les deux engrenages cylindriques (5, 6) pouvant pivoter l'un par rapport à l'autre autour d'un axe de pivotement qui est agencé au moins approximativement de manière coaxiale par rapport à l'arbre d'entraînement commun (7).

6. Machine agricole selon la revendication précédente, l'engrenage cylindrique (6) ayant le plus petit nombre de dents entraînant un rouleau (3), de préférence supérieur, suspendu de manière mobile transversalement à l'axe longitudinal du rouleau, et l'engrenage cylindrique (5) ayant le plus grand nombre de dents entraînant un rouleau (2) monté de manière rotative mais fixe.

7. Machine agricole selon l'une quelconque des revendications précédentes, l'engrenage cylindrique (6) ayant le nombre pair de dents étant associé à un/au rouleau (3) suspendu de manière mobile transversalement à l'axe longitudinal du rouleau, de telle sorte que ledit rouleau (3), en cas de bourrage ou d'augmentation de la résistance à l'entraînement, subit, sous l'effet des forces d'entraînement dudit engrenage cylindrique (3) une force de mouvement qui est orientée à l'écart de l'autre rouleau (2) et/ou subit un effet d'auto-ouverture, le rouleau (3) suspendu de manière mobile étant de préférence agencé du côté de la dent d'entrée (11) dudit engrenage cylindrique (6) sur lequel la dent d'entrée (11) s'éloigne de l'autre rouleau (2), notamment vers le haut.

8. Machine agricole selon l'une quelconque des revendications précédentes, une suspension séparée des engrenages cylindriques (5, 6) étant prévue pour suspendre de manière mobile l'un des rouleaux (3) et pour transmettre les forces de palier au-delà des engrenages cylindriques (5, 6), ladite suspension présentant notamment un agencement à bras pivotant (13) qui supporte ledit rouleau (3) de manière pivotante autour d'un axe de pivotement qui s'étend au moins approximativement coaxialement à l'arbre d'entraînement commun (7).

9. Machine agricole selon l'une quelconque des revendications précédentes, une liaison d'entraînement articulée, de préférence élastiquement articulée (14), étant prévue entre au moins un rouleau, notamment le rouleau (3) suspendu de manière mobile transversalement à l'axe longitudinal du rouleau, et l'engrenage cylindrique (6) associé, qui est réalisée pour transmettre le couple d'entraînement et compenser les défauts angulaires et/ou le désalignement axial entre l'arbre de sortie de l'engrenage cylindrique (6) et le rouleau (3).

10. Machine agricole selon la revendication précédente, ladite liaison articulée (14) présentant un élément de liaison élastique (15) qui est agencé entre un élément de liaison (16) relié de manière rigide à l'arbre de sortie de l'engrenage cylindrique (6) et un élément de liaison (17) fixé de manière rigide au rouleau (3), et reliant ces deux éléments de liaison (16, 17) en transmettant le couple de telle sorte que ledit élément de liaison (15) subit une déformation élastique lors de mouvements de flexion du rouleau (3) par rapport à l'arbre de sortie de l'engrenage cylindrique (6), l'élément de liaison élastique (15) formant notamment une plaque ou une plaque annulaire élastique, de préférence ayant l'élasticité du caoutchouc, qui est montée entre deux brides de raccordement formant lesdits éléments de liaison (16, 17).

11. Machine agricole selon l'une quelconque des revendications précédentes, l'arbre de sortie de l'engrenage cylindrique (6) étant centré par rapport au rouleau (3) entraîné par l'engrenage cylindrique (6) par un dispositif de centrage (18).

12. Machine agricole selon l'une quelconque des revendications précédentes, les deux engrenages cylindriques (5, 6) étant agencés en décalage axialement l'un par rapport à l'autre dans la direction de l'arbre d'entraînement (7) et/ou étant agencés du même côté de la paire de rouleaux à entraîner (1), l'engrenage cylindrique (6) ayant le plus petit nombre de dents étant agencé plus loin de l'extrémité frontale de la paire de rouleaux (1) que l'engrenage cylindrique (5) ayant le plus grand nombre de dents.

13. Machine agricole selon l'une quelconque des revendications précédentes, un rouleau inférieur (2) de la paire de rouleaux (1) étant monté de manière rotative, mais fixe sur un châssis d'unité et un rouleau supérieur (3) de la paire de rouleaux (1) étant suspendu de manière mobile en hauteur, le rouleau inférieur (2) étant associé à l'engrenage cylindrique à trois roues (5) et le rouleau supérieur (3) étant associé à l'engrenage cylindrique à deux roues (6).

14. Machine agricole selon l'une quelconque des revendications précédentes, qui est réalisée sous forme de conditionneur pour traiter les produits récoltés coupés.
